Europäisches Patentamt

European Patent Office

Office européen des brevets

(19)

(11) Publication number: **0 378 960**
**A2**

(12) # EUROPEAN PATENT APPLICATION

(21) Application number: **89500129.5**

(22) Date of filing: **18.12.89**

(51) Int. Cl.5: **G06K 7/00, G06K 13/08**

(30) Priority: **18.01.89 ES 8900170**

(43) Date of publication of application:
**25.07.90 Bulletin 90/30**

(84) Designated Contracting States:
**AT BE CH DE FR GB GR IT LI LU NL SE**

(71) Applicant: **AMPER S.A.**
**Torrelaguna, 75**
**E-28027 Madrid(ES)**

(72) Inventor: **Paris Fernandez, Jose Agustin**
**Torrelaguna, 75**
**E-28027 Madrid(ES)**

(74) Representative: **Carpintero Lopez, Francisco**
**HERRERO & ASOCIADOS, S.L. Alcalá, 21**
**E-28014 Madrid(ES)**

(54) **Manual optical character reading device.**

(57) The manual optical character reading device relates to a system for reading documents which is typically used in banking spheres, the function whereof is to read a coded line of standardised characters provides on such documents, and send same through a communications channel to a computer, generally for subsequent processing or storage.

It is comprised by the functional association of a character reading device and a power source which supplies all the necessary voltages, both modules being joined by a connecting cable and suitable connectors.

The system is capable of optically reading optical character codes and magnetic codes, selection whereof is effected by means of a programmable microswitch, reading taking place by means of a linear CCD, without the need for drag speed recording elements.

FIG.-I

## MANUAL OPTICAL CHARACTER READING DEVICE

OBJECT OF THE INVENTION

The present invention, in accordance with the title of the specification, relates to a manual optical character reading device, a system for reading documents which is typically used in banking spheres, the function whereof is to read a coded line of standardised characters provided on such documents, and send same through a communications channel to a computer, generally for subsequent processing or storage.

BACKGROUND OF THE INVENTION

Most of the documents used in banking spheres use one or more of the following standardised character codes: CMC-7, E13B, OCR-A, OCR-B.

All of these codes are described in the norms and recommendations of international standardizing organisms. The first two of these codes were developed to facilitate magnetic reading (MICR type: Magnetic Ink Character Recognition) and must be printed with a special ink containing magnetic particles. The other two codes have been developed for optical reading thereof (OCR type: Optical Character Recognition) and do not specify what type of ink they should be printed with, although what is establish is the contrast which must exist between the ink they are printed with and the background on which they are printed. In these two cases, both groups are treated in the same manner with the present system and are optically read.

DESCRIPTION OF THE INVENTION

The manual optical character reading device described by the invention relates to an optical reader for the characters printed on documents, in accordance with different standardised codes, combined with a magnetic band reader, reading being effected by manually dragging the document across a groove wherein are located the reading devices. It has been essentially designed for use in banking operations, and as a peripheral for other systems.

It consists of two physically independent units connected by means of a flexible cable. One of such units is the reader itself, and the other a power source which supplies to the reading unit the voltages necessary for its operation.

The system can optically read the more commonly used optical character codes (OCR) in banking spheres, in addition to magnetic codes (MICR).

Installation of the device requires no special skill, and maintenance (which is practically non-existent) may be easily carried out by the user himself, since it involves only substitution of lamps and cleaning of the magnetic heads.

Handling is extremely simple, and the only adjustment which must be made is the height of the reading band in order to adapt same to different types of documents, this adjustment being effected by means of an externally operable control. Operation of the system is on-line, and it is connected as a peripheral to a computer with an RS232C interface and various possible protocols.

The system is comprised by a small module which is similar in appearance to a conventional magnetic card reader. It is provided with a groove on its upper area, where the document to be read is introduced from the right), with the coded line facing the operator and on the lower part. Once within the groove, the document is manually dragged towards the left, without surpassing the specified speed and/or acceleration limits. This groove is capable of reading documents having magnetic bands in accordance with ISO norms 7810 and 7813.

Various characteristics of the device as explained hereinafter should be noted.

It allows the reading of documents having a line of characters containing one or two codes (an MICR code and an OCR code), as well as documents containing information coded on one or two magnetic bands.

With the same device, it is possible to combine for reading, with the use microswitches, any MICR code with any OCR code.

Reading may be carried out by manually dragging the documents, without the need for an element to record the speed at which same are displaced.

Optical reading is effected by means of a linear photosensitive CCD device (Charge Coupled Device) which optically explores the vertical lines of the documents.

The recognition algorithm is independent (within specified limits) of the speed at which the document passes through and of changes in such speed (also within certain specified limits).

The characters read are those contained in a band of height 8 mm throughout the document, detecting whether one or more of the characters extend beyond the upper and lower limits of the said band (obviously, the characters which fall completely outside this band are not detected).

The said band can be adjusted as regards the lower end of the document, wherefore it is possible to read character lines in documents wherein the band is located at a height of between 2 and 26 mm from the lower edge of the document (although for correct reading of a given document, all the characters of its coded line should be located within an 8 mm band).

The system for processing the signal delivered by the CCD tolerates variations as to reflectance of the document in a range of from 60 to 100 %, and variations in the light intensity afforded by the lamps of up to ± 20 %, provided the specified PCS (Print Contrast Signal) is maintained, due to an adjustable gain and offset control system.

## DESCRIPTION OF THE DRAWINGS

In order to complete the description being made, and to assist the better understanding of the characteristics of the invention, a set of drawings is attached to the present specification, as an integral part thereof, where the following has been shown in an illustrative and non-limiting manner:

Figure 1.- Shows a general view of the manual optical character reading device in accordance with the invention.

Figures 2 and 3.- Show the internal configuration of the reading device, as well as a detailed view of the guides which allow passage of the document to be read.

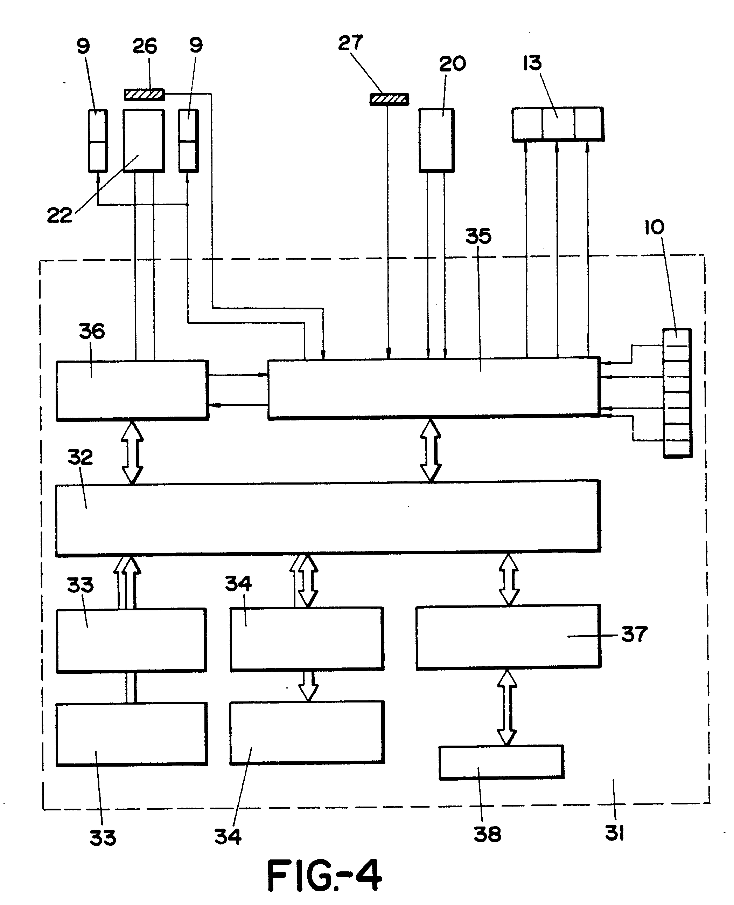

Figure 4.- Shows a block diagram of the optical reading device showing each and every one of the elements comprising same.

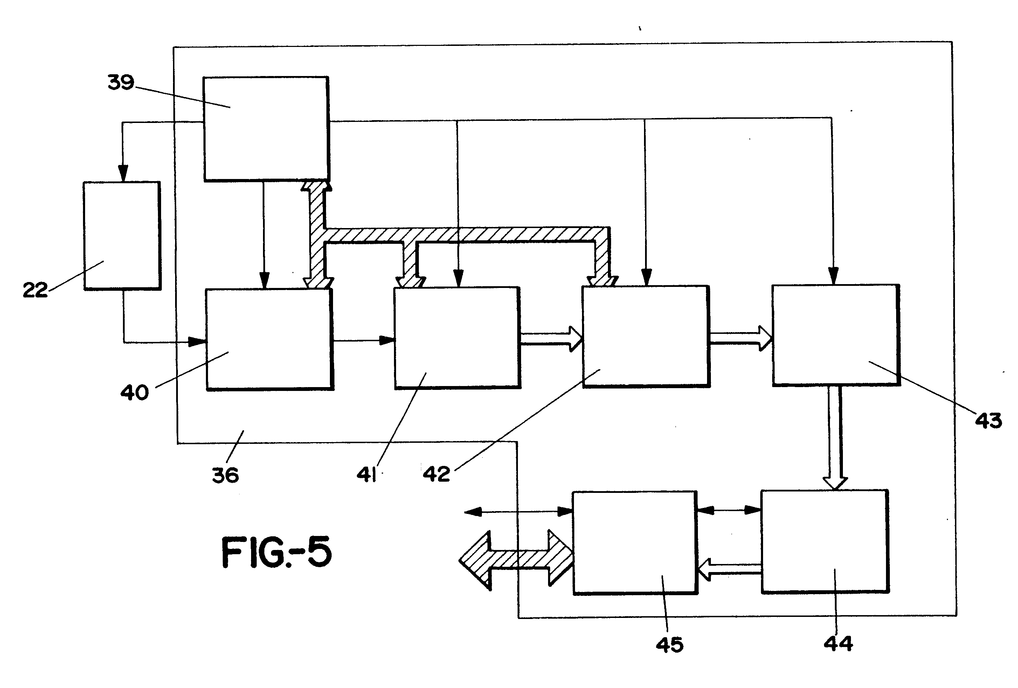

Figure 5.- Shows a block diagram of the signal processing of the optical reading device.

## PREFERRED EMBODIMENT OF THE INVENTION

In the light of the figures, it can be seen that the manual optical character reading device being described is comprised by the functional association of two well-differentiated units, a power source 1 which supplies the necessary operational voltages for the reading device, and the character reading device 21 itself, which includes all the electronic and mechanical elements necessary for reading to take place, both units being joined by a cable 3.

The power source module 1 is installed within a metal box. Externally, it is provided with an earthed mains inlet 4, the module itself including fuses and a power switch. It is likewise provided with an outlet for the power cable 3, which is approximately two metres long and ends In a female connector 5, of the sub-D type with nine pins which is connected to the reading unit 2.

The power source 1 is of the commuted I type, supplying voltages of + 5V, + 12V and - 12V, with common mass and independent 0-29V, used for feeding incandescent lamps.

Both the printed circuit plate and the components used, cabling, computerization, finish and assembly of the different elements comprising the source, are made in accordance with the international security norms VDE, UL, IEC and comply with the FCC and VDE norms on electromagnetic compatibility.

The reading unit 2 is designed as a desktop device. It has been specifically designed to facilitate comfortable manual dragging of the document across groove 7, and to enable reading of creased or folded documents (good dragging of the document is essential for good quality reading). Access to the inside is made possible by cover 8 located on the upper part of the unit, such that lamps 9 and programming microswitches 10 may be easily substituted without it being necessary to dismantle the device.

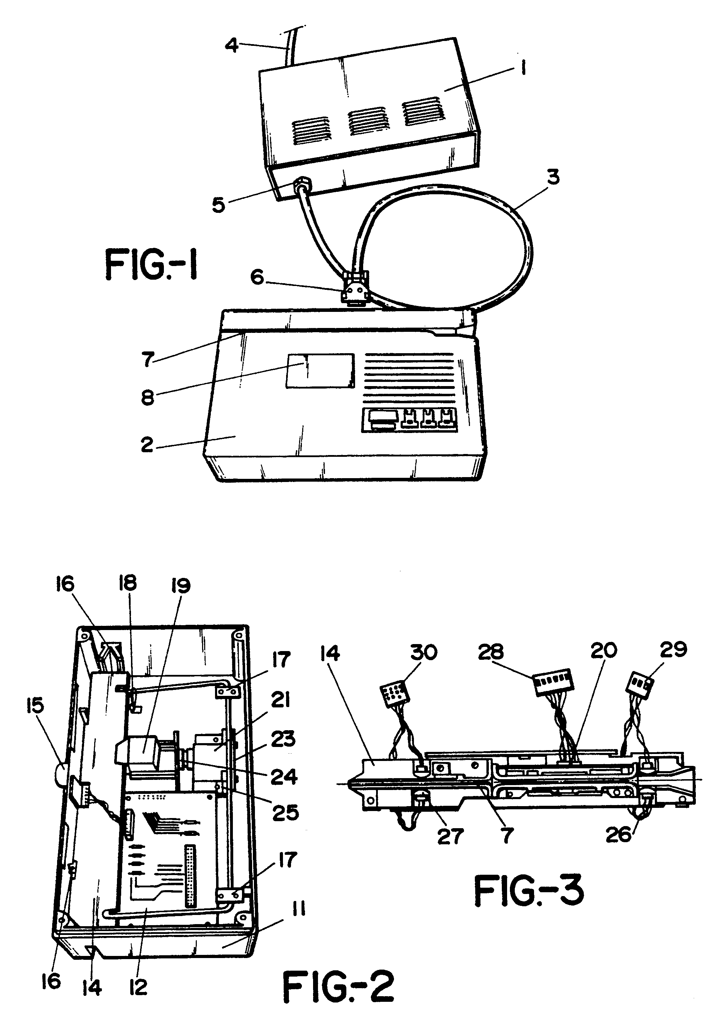

Figures 2 and 3 show the remainder of the elements housed under cover 11 and within the guide assembly. The printed circuit distribution plate 12 carries the signal LEDS 13, together with a sound indicator and the signal microswitches10, as the most important elements.

The guide assembly 14 is designed to facilitate correct passage of the documents across the reading head in a suitable manner. The height of such groove can be externally adjusted by means of a control 15. In order that it maintains its horizontal position during vertical displacement guides 16 are provided on the rear wall of cover 11, together with a rotating system 17 on two points thereof. The action of a spring 18 compensates passage of the assembly, such that in the normal position there is no displacement thereof even If the external control 15 is loosened. Input and output photodetector assemblies 20 and 27 and magnetic band reading device 20 are likewise provided on guide 14.

The optical reading head assembly 21 consists of a lighting area 19 housing lamps 9 of a support which constitutes the centre of the assembly. The photosensitive device CCD 22 is applied thereto, said device being welded in turn to printed circuit plate 23 and objective 24. This piece is fixed to the cover by means of screws 25 within slit holes, which facilitate adjustment of the distance from the document to the sensitive area of CCD 22, which adjustment should be made at the manufacturing stage. The position of objective 24 may be adjusted in the direction of the optical axis by means of a threaded element supporting same. The paper guide area in this direction is matt black in colour, so that when no document is present, reflectance is at its minimum value. Any document to be optically read presents a substantially higher reflectance, it being thus possible to detect the presence of documents on the optical axis.

The guide assembly 14 is provided with an input document detector 26 comprised by facing photoemitter and photodetector, a magnetic band reading device 20 and an output detector 27 similar to the input detector. Each of such elements is provided with outlet cables which are grouped into a single bundle, ending in connectors leading to the distribution plate 12. Connector 28 for the magnetic reading head has 8 pins and is polarised, whereas those of detectors 29 and 30 are of 4 and 3 pins, respectively, to avoid confusion on assembly.

Design of the main printed circuit plate 31 is that of a microprocessor system for general use. It includes a 16-bit CPU 32, EPROM memory units 33, RAM memory units 34, an E/S unit 35, and complementary circuitry distributed on signal processing printed circuit plate 36, a communications device 37 and a series channel 38.

The signal processing plate 36 is in fact comprised by two printed circuit plates sandwiched together. One is in charge of the analogical and digital processing of the video signal received from CCD 22, and is connected to CPU 32 as a specialized peripheral. It includes clock generation 39 for CCD 22, an automatic gain and offset control 40 based on the signal valuesat referenced moments, an A/D convertor 41, threshold and coding circuitry 42 and 43, FIFO memory 44 circuitry, and an interface with an output bus to a computer 45.

The document to be read is pushed through groove 7 of the device from right to left, with the character line towards the operator, and on the lower part. Introduction of the document activates the paper input detector 26, whereby lamps 9 are switched on. At this point, it is not yet known whether the document contains optical or magnetic information.

The magnetic reading module 20 is located in groove 7 before the optical reading head 21 (in the direction of passage of the document), so that if the document has a magnetic band, this module will detect a signal and it is inferred that a magnetic reading will be effected, lamps 9 are therefore switched off and reading of the magnetic band begins.

If this module does not receive a signal prior to detection of the paper by the optical reading head 21, it is inferred that an optical reading will be made and the optical reading process begins.

Detection by output photodetector 27 that the paper has left the groove ends the reading process and initiates communication if the reading has been satisfactory (i.e. error-free). During the communication process the line of characters or magnetic band(s) which have been read are transmitted to the computer, in accordance with a specific communications protocol.

It is not considered necessary to extend the present description any further for a person skilled in the art to which it pertains to understand the scope of the invention and the advantages derived therefrom.

The materials, shape, size and arrangement of the elements may vary, provided such variation does not imply a modification of the essentiality of the invention.

The terms used in the description of the specification should be understood to have a wide and non limiting meaning.

## Claims

1.- Manual optical character reading device, which, being designed to read a coded line formed by standardised optical or magnetic characters, in documents typically used in banking spheres, and to send same through a communications channel to a computer, generally for its subsequent processing or storage, is essentially characterised in that it is comprised by the functional association of a commuted power source 1 and a character reading unit 2 joined by a cable 3, which character reading unit 2 is provided with a groove 7 on which are arranged document input and output detectors 26 and 27, together with magnetic and optical reading devices 20 and 21, all of which are arranged on different printed circuit plates, the existence of a microprocessor constituted by a 16 bit CPU 32, EPROM memory units 33, RAM memory units 34, an input/output unit 35 and related electronic circuitry having been foreseen on an independent printed circuit plate 31, an additional printed circuit plate 36 carrying the electronic circuitry for signal processing which includes a clock generation module 39 for optical reading device 21, automatic gain and offset controlling elements 40, an analogical/digital convertor 41, threshold and coding circuitry 42 and 43, a FIFO memory 44 and an interface with output bus to computer 45

2.- Manual optical character reading device, in accordance with claim 1, characterised in that the optical character reading device includes a linear CCD 22 (Charge Coupled Device), signal LEDS 13, a sound indicator and programming microswitches 10.

3.- Manual optical character reading device, in accordance with claim 1, characterised in that it includes a guide assembly 14 related to which is an external adjusting control 15 which guide assembly is aided by a rotating system 17 and a

compensating spring 18.

FIG.-1

FIG.-2

FIG.-3

FIG.-4

FIG-5